# EUROPEAN PATENT APPLICATION

(11) **EP 1 084 604 A1**
(43) Date of publication of application: **21.03.2001**
(21) Application number: 00120085.6
(22) Date of filing: 15.09.2000
(51) Int. Cl.: A01D 46/26, F16L 27/08

(54) **Pneumatic articulated joint particularly for pneumatic tool**

(30) Priority: 17.09.1999 IT BO990500
(71) Applicant: Campagnola S.R.L., 40069 Zola Predosa (Bologna) (IT)
(72) Inventor: Romano, Andrea, 40055 Castenaso (Bologna) (IT)
(74) Representative: Negrini, Elena

(57) **Abstract**

A pneumatic articulated joint particularly for pneumatic tool essentially including a support mean (19) provided with an inner duct (44) and a pneumatic actuator (C) for driving operating members (F), includes a bracket (30) having a through housing (13, 304) and a first coupling sleeve (2, 300) provided with channel means (23, 305) connecting in flow communication the free end of the first coupling sleeve (2, 300) with a delivery channel (60) carried out at least in the bracket (30) having a female clutch means (4); an arm (40) having a plate (50) provided with an opening (130, 303) for housing a clamping mean (150) which engages the through housing (13, 304).

The plate (50) has an annular housing (21, 301) partially engaged by the first coupling sleeve (2, 300), with the annular housing (21, 301) being in flow connection with a link channel (42) of the arm (40), and the plate (50) includes a male clutch means (5) complementary associated with the female clutch means (4).

The actuator (C) is pneumatically connected to the inner duct (44), by means of the feeding duct (41), the link channel (42), the annular housing (21), the channel means (23) and the delivery channel (60); the annular housing (21, 301) and the first coupling sleeve (2, 300) forms a pneumatically sealed rotation guide for the joint.

The clutch means, female (4) and male (5), are engaged to lock, in cooperation with the clamping mean (150), the mutual positions of the bracket (30) and of the arm (40); these latter are associated respectively to the actuator (C) and to the support mean (19) or vice-versa.

## Description

The present invention relates to apparatuses and devices particularly for agriculture purposes, for instance to harvest fruits, olives, coffee plant fruits, or to prune branches, and the like.

More particularly, the present invention relates to a pneumatic articulated joint particularly for pneumatic tool fit for the mechanical and pneumatic interconnection between tool components.

There are known pneumatic tools having operating means, such as blades for pruning or combs for harvesting fruits, driven by means of pneumatic actuators provided with a central body having a cylindrical chamber for an alternative piston and provided with delivery ducts and a pipes network. The delivery duct is designed to conduct the supply compressed air toward a slide valve, carried out in the actuator. There are also suitable auxiliary pipes that allow the return of the compressed air to the slide valve. Such pipes have external outlet for the exhaust air.

The pneumatic actuator is fed by means of an air compressor by means of a rod fixedly supporting the actuator. The rigid connection between the rod and the tool doesn't allow the proper angular orientation of the tool. In this way it is not possible to adapt the tool orientation to the various operative needs.

There are known joints for adjusting the orientation of the pneumatic tools in which the pneumatic connection is carried out by means of flexible and external pipes and the mechanical connection is carried out by clamping plates of the connected members, by means of screws.

The main drawback of these known joints consists in the dimensions and in the lack of reliability affecting the external and flexible pipes.

A further drawback is that the inclination adjustment and the disassembly of the joint require specific tools making difficult and slow the adjustment and maintenance on field.

Another drawback is that the joint rotation stop is made by the friction between the plates. Said friction cannot be enough because of the screw loosening, or because of the possible presence of dirt or liquid between the plates.

The main object of the present invention is to propose a pneumatic articulated joint to adjust the inclination of operating members of a pneumatic tool, in respect with a support rod, handle, or the like, according to the operating needs.

Other object of the invention is to propose a pneumatic joint particularly for tools providing the perfect tightness between the feeding duct of the support rod and the delivery ducts of the pneumatic tool.

Further object is to propose a joint extremely easy to hand and adaptable to the most various operating needs.

Another object is to propose a joint providing the pneumatic tightness also during the inclination adjustment.

The characteristics of the invention are highlighted in the following, with particular reference to the following drawing sheets, in which:

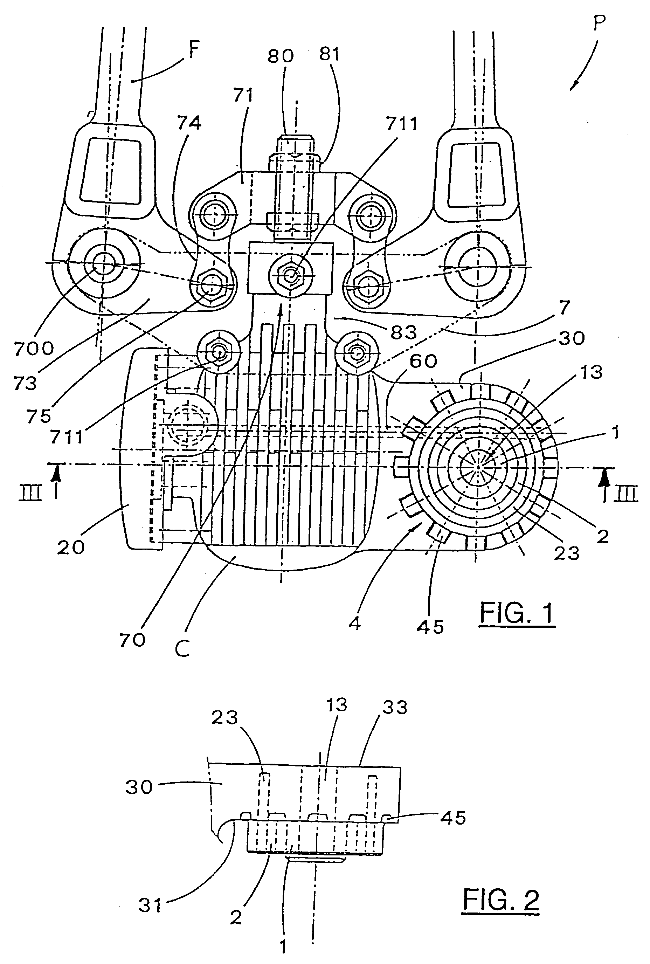

- figure 1 shows a front view of a member of the pneumatic articulated joint of the present invention associated to a pneumatic actuator of an harvesting tool;
- figure 2 shows a partial side view of the member of figure 1;

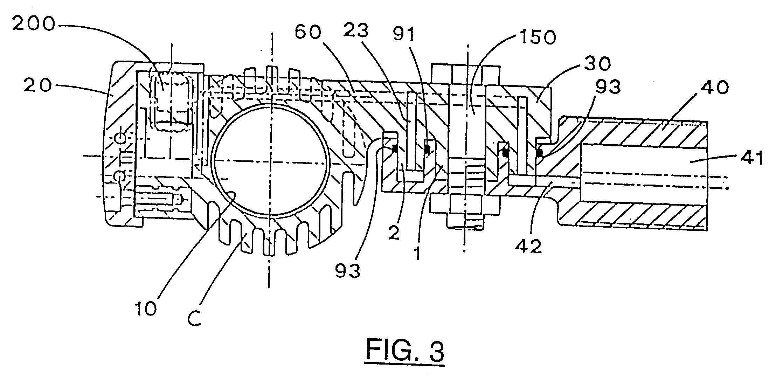

- figure 3 shows a longitudinal section view of the joint associated with the pneumatic actuator;
- figures 4 and 4a show the member of joint associated to the support mean of figure 3, respectively in a longitudinal section view and front view;
- figure 5 shows a longitudinal section partial view of a joint variant;
- figure 6 shows a transversal sectioned view of the joint of figure 5;
- figure 7 shows a frontal reduced view of a variant of the member of figure 4a.

In figures from 1 to 4a, reference P indicates a tool having a support mean 19, for instance consisting of a rod or an handle, connected by means of a pneumatic joint of the present invention to a pneumatic actuator C for driving operating members F.

The support mean 19, allows to handle the operating members F, for instance consisting of combs for harvesting fruits or pruning blades, driven by means of the actuator C.

Such actuator C includes a central body having a cylinder 10 fit to receive an alternative piston (not shown), this latter is fixed to an end of a rod 80. Operating members F are connected to the threaded end of the rod 80.

The actuator is provided with a slide valve 20 which is fed by a compressed air of a source, for instance a compressor.

The compressed air is supplied to the valve 20 through a series of pipes of the actuator and the pneumatic joint. This latter is mechanically and pneumatically connected to the support mean 19 provided with an inner duct 44 which is in flow communication with the supply source by means of a flexible tube (both not shown).

The joint essentially consists of a bracket 30 and of an arm 40 having a plate 50.

The bracket 30 is provided with a through housing 13 and with a first coupling sleeve 2. Channel means 23 end at the free end of the first coupling sleeve 2 and they are in flow communication with a delivery channel 60 carried out at lest into the bracket 30.

The channel means 23 essentially consist of at least a cavity, for instance tubular shaped, or a plurality of a cylindrical bores carried out inside the wall of the first coupling sleeve 2 and inside the bracket 30.

The bracket 30 is also provided with a female clutch means 4.

The plate 50 has an opening 130 and an annular housing 21, almost complementary and facing to the first coupling sleeve 2.

The first coupling sleeve 2 engages the annular housing 21 freeing a space in the bottom of this latter.

The bottom of the annular housing 21 is in flow communication with a link channel 42 of the arm 40. The plate 50 includes a male clutch means 5 complementary and facing the female clutch means 4.

A clamping mean 150 engages the opening 130 and the through housing 13 to fix the bracket 30 to the plate 50. The clamping mean 150 essentially consists of a bolt with related nut.

The slide valve 20 is in flow communication with the inner duct 44 through the feeding duct 41, the link channel 42, the bottom of the annular housing 21, the channel means 23 and the delivery channel 60.

In correspondence of a loosening condition of the clamping mean 150, the annular housing 21 and the first coupling sleeve 2, form a rotation guide for the joint.

In correspondence of a tightening condition of the clamping mean 150, the female clutch means 4 and the male clutch means 5 are engaged for fixing the mutual position of the bracket 30 and of the arm 40.

These two last, as shown, are respectively associated to the actuator C and to the support mean 19 or vice versa. In the first case the delivery channel 60 extends up to the slide valve 20 through the actuator C, and the link channel 42 flows into the inner duct 44 through the feeding duct 41. In the second case the link channel 42 extends, through the actuator C, up to the slide valve 20 and the delivery channel 60 flows into the inner duct 44.

The joint further comprises a second coupling sleeve 1 carried out in the bracket 30 internally to the first coupling sleeve 2. The second coupling sleeve 1 is housed in a related cylindrical cavity 11 of the plate 50.

The male clutch means 5 essentially consists of protrusions 35 equidistantly displaced on a circumference centered on the axis of the opening 130 and external to the annular housing 21.

Each cylindrically shaped side wall of the annular housing 21 has an annular groove 9 for housing sealing means 91, 93 consisting of elastic rings for instance of the type O-Ring.

The operation provides that, starting from the loosening condition of the clamping means 150, the angle of the joint is adjusted according to the actual operating needs. The possible different angles of the joint essentially depend on the dimensions of the protrusions 35.

The locking of the clamping means 150 causes the engagement of the female housings 45 with the protrusions 35 and therefore the angle fixing of the pneumatic articulated joint.

The compressed air flow toward the actuator C of the tool P is guaranteed at any angle by means of the annular shape of the duct, defined by the bottom of the annular housing 21 and by the first coupling sleeve 2.

It is important to notice that the position of the pneumatic sealing means 91, 93 advantageously guarantees the pneumatic tightness also in correspondence of the loosening condition of the clamping means 150.

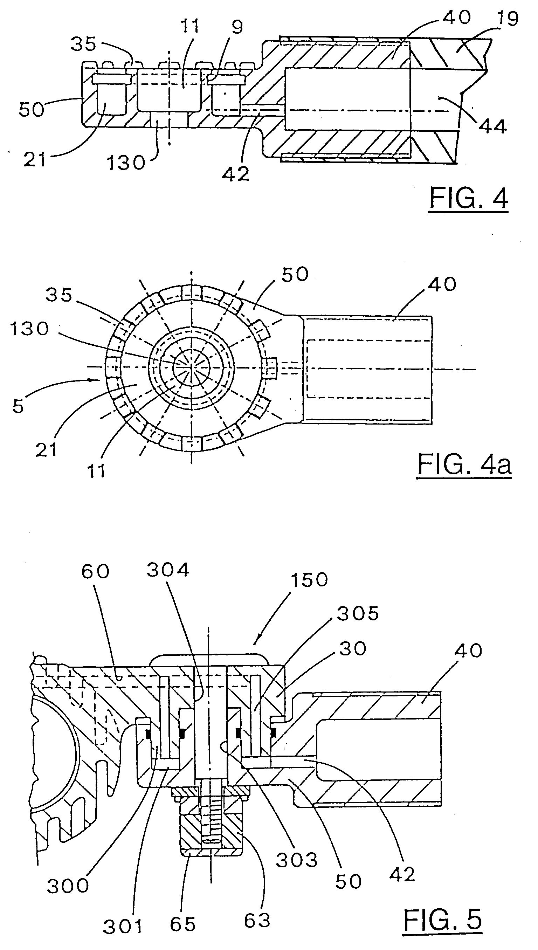

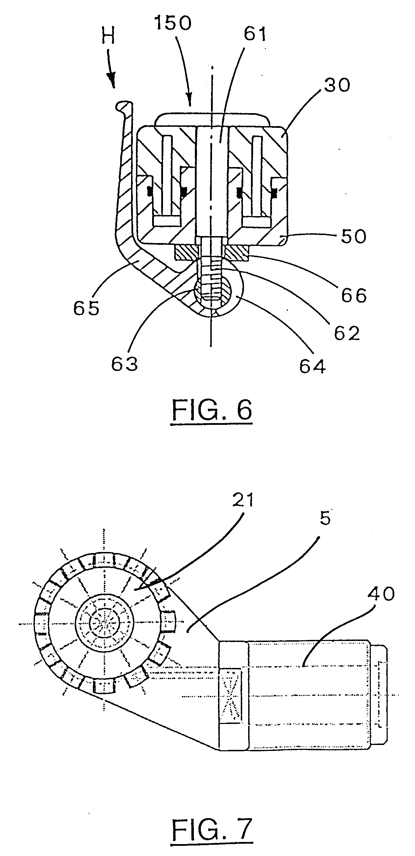

In the variant of figures 5 and 6, the joint is without the second coupling sleeve 1 and the relative cylindrical cavity 11. In this variant the bracket 30 has the first coupling sleeve 300, provided with channel means 305 flowing in the delivery channel 60. The first coupling sleeve 300 engages the annular housing 301 of the plate 50. The bottom of the annular housing 301 defines an annular cavity with the free end of the first coupling sleeve 300. The annular cavity is in flow communication with the channel means 305 and the link channel 42.

The clamping mean 150 engages a through housing 304 and an opening 303, respectively carried out in the bracket 30 and in the plate 50 of the arm 40. The clamping mean 150 includes a screw 61 whose threaded end 62 engages a pivot 63 rotationally connected to a cam mean 64 of a lever 65. The cam mean 64 acts against the joint by interposition of a bored plate 66.

The bracket 30 and the plate 50 are respectively provided with female housings 45 and protrusions 35.

In this variant, also the bracket 30 and the arm 40 can be associated to the actuator C and to the arm 40 or vice versa.

The operation of this variant differs from the operation of joint shown in figures from 1 to 4a only because the loosening and the locking of the clamping mean 150 are advantageously obtained by simply moving the lever 65.

The further variant of figure 7 differs from the previously described joints because the rotation guide center is advantageously not aligned with the longitudinal axis of the arm 40.

The main advantage of the present invention is to provide a pneumatic articulated joint particularly for pneumatic tools to adjust the angle of the operating members of the tool in respect with the support mean according to the actual operating needs.

Other advantage of the invention is to provide a pneumatic articulated joint having a perfect pneumatic tightness between the inner duct of the support mean and the supply channel of the pneumatic actuator also in correspondence of the loosening condition of the clamping means.

Other advantage is to provide a joint extremely easy to hand and adaptable to the most various operating needs.

## Claims

1. Pneumatic articulated joint particularly for pneumatic tool essentially including a support mean (19) provided with an inner duct (44) and a pneumatic actuator (C) for driving operating members (F), said joint characterized in that includes:
- a bracket (30) having a through housing (13, 304) and a first coupling sleeve (2, 300) provided with channel means (23, 305) connecting in flow communication the free end of the first coupling sleeve (2, 300) with a delivery channel (60) carried out at least in the bracket (30) having a female clutch means (4);
- an arm (40) having a plate (50) provided with an opening (130, 303) for housing a clamping mean (150) which engages the through housing (13, 304), with the plate (50) having an annular housing (21, 301) partially engaged by the first coupling sleeve (2, 300), with the annular housing (21, 301) being in flow connection with a link channel (42) of the arm (40), and the plate (50) including a male clutch means (5) complementary associated with the female clutch means (4);
the actuator (C) being pneumatically connected to the inner duct (44), by means of the feeding duct (41), the link channel (42), the annular housing (21), the channel means (23) and the delivery channel (60); the annular housing (21, 301) and the first coupling sleeve (2, 300) forming a pneumatically sealed rotation guide for the joint; the clutch means, female (4) and male (5), are engaged to lock, in cooperation with the clamping mean (150), the mutual positions of the bracket (30) and of the arm (40), these latter associated respectively to the actuator (C) and to the support mean (19) or vice-versa.

2. Joint according to claim 1 characterized in that further includes a second coupling sleeve (1) of the bracket (30) housed in a related cavity (11) of the plate (50).

3. Joint according to anyone of the previous claims characterized in that said male clutch means (5) consist of equidistantly displaced protrusions (35) complementary to female housings (45) carried out in the female clutch means (4).

4. Joint according to claim 1 or claim 2 characterized in that each side wall of the annular housing (21, 301) is provided with at least one annular groove (9) for housing sealing means (91, 93).

5. Joint according to claim 4 characterized in that the sealing means (91, 93) are elastic rings.

6. Joint according to anyone of the previous claims characterized in that said clamping mean (150) comprises a bolt and a related nut.

7. Joint according to anyone of the previous claims characterized in that said clamping mean (150) comprises a screw (61) whose threaded end (62) is engaged with a pivot (63) rotationally associated with a cam mean (64) fit for clamping the joint.

8. Joint according to anyone of the previous claims characterized in that the center of the annular housing (21, 301) is not aligned with the longitudinal axis of the arm (40).

9. Joint according to anyone of the previous claims characterized in that the channel means (23, 305) includes at lest one tubular shaped cavity.
